# EUROPEAN PATENT APPLICATION

(11) **EP 3 462 107 A1**
(43) Date of publication of application: **03.04.2019**
(21) Application number: 18195854.7
(22) Date of filing: 21.09.2018
(51) Int. Cl.: F24S 20/30, A23C 9/12, F24S 30/425

(54) **Solar yogurt maker**

(30) Priority: 27.09.2017 ES 201731120 U
(71) Applicant: Sanchez Encinas, Alvaro, 04009 Almeria (ES)
(72) Inventor: Sanchez Encinas, Alvaro, 04009 Almeria (ES)
(74) Representative: Lahidalga de Careaga, Jose Luis

(57) **Abstract**

The invention consist on a solar yogurt maker that, being comprised of a receptacle (2) that defines an interior housing (3) suitable for incorporating, at least, one container (4) with milk "sown" with bacteria for making yogurt, that is characterized in that this receptacle (2) has moveable fastening means (5, 6), in order to tilt its front face (2a) more or less and to be able to orient it to the sun, which has a transparent partition (7) that encompasses the entire surface area. Behind this transparent partition (7), with a small separation (8), is an absorbent surface or flat solar collector (9) capable of transforming radiation, which crosses through the transparent partition (7) and impacts on said collector, into thermal energy in order to raise the temperature of the milk in the container (4), located within the receptacle (2), to a temperature that provokes its fermentation.

## Description

### PURPOSE OF THE INVENTION

The invention, as expressed in the title of this descriptive report, refers to a solar yogurt maker that provides, in the function to which it is dedicated, novel advantages and characteristics that are described in detail later on, and which are an improvement to the current state of the art.

More specifically, the purpose of the invention is focussed on a device for preparing yogurt, or a type of fermented dairy product that needs heat for the fermentation, in a homemade manner, using solar energy to achieve the temperature that permits the fermentation process which leads to obtaining it, therefore, without the need for any other type of energy consumption.

### INVENTION'S FIELD OF APPLICATION

The field of application of this invention is framed in the sector of the industry dedicated to the manufacturing of devices that function with solar energy, including at the same time the area of the industry dedicated to the manufacturing of domestic yogurt makers.

### BACKGROUND OF THE INVENTION

Yogurt is a very ancient dairy product obtained by means of the bacterial fermentation of milk. For its preparation, specific bacteria are introduced in the milk and, at appropriate temperatures, they multiply, acidifying the medium and curdling the milk after the necessary time, in this way transforming the milk into yogurt. Usually, the temperatures most used are around 43ºC and the time necessary at this temperature is usually around 3 hours of fermentation, but other combinations of time and temperature also serve to prepare yogurt. Afterwards, the yogurt is refrigerated at around 5ºC to acquire its characteristic consistency and for its preservation.

For this preparation in the domestic scope, in addition to systems by traditional cooking, there exist in the market yogurt makers consisting of electrical home appliances that control the fermentation temperature, but that, obviously, as they consist of an electrical appliance, need electrical energy to function, generating consumption thereof, and its use would not be possible without an electrical supply.

The objective of this invention is, therefore, to develop a home yogurt maker that does not need electricity and does not depend on any energy other than that which solar radiation offers, and consequently, it is a fully ecological device that, in addition, is apt for being used anywhere.

Furthermore, different devices that function using solar energy are widely known, normally through some type of solar collector, such as, for example, solar ovens and cookers, which usually incorporate a flat solar panel that is the most usual type of solar collector, consisting of a device to take advantage of solar radiation energy, transforming it into thermal energy of low temperatures for domestic or commercial uses.

Nonetheless, the existence of any yogurt maker that functions by this principal or that presents some structural and constitutive characteristics equal or similar to those that the one claimed herein presents, is not known, at least not by the applicant.

### EXPLANATION OF THE INVENTION

The solar yogurt maker that the invention proposes is configured, then, as an outstanding novelty within its field of application, since according to its implementation and in a non-limiting manner, it satisfactorily achieves the objective, with the characterising details that distinguish it being appropriately included in the final claims that accompany this description.

Specifically, what the invention proposes, as mentioned above, is a device for preparing homemade yogurt using solar energy by means of the incorporation of a flat solar collector in order to achieve the temperature that allows the fermentation process which leads to its attainment.

For this, and more specifically, the yogurt maker is configured, essentially, from a receptacle suitable for introducing in its interior the container holding the milk mixed with the corresponding ferment in order to obtain the yogurt. Thanks to an axle and a scalable fastening system, the front face of the receptacle may adopt, on the day in which it is going to be used, the appropriate tilt with respect to the sunrays (according to the latitude, the time of year and the atmospheric temperature) and in this way the milk reaches the necessary temperature so that fermentation takes place. The front face is of glass or other transparent material with similar qualities (it allows light to pass easily and lets the heat generated in the interior escape with difficulty), behind it, and
at a short distance a solar absorbent or collecting surface is placed (preferably of a good heat-conducting and dark material), which absorbs the solar energy and transforms it into thermal energy. In this way, the temperature within the receptacle is increased until the milk reaches an appropriate temperature for the growth of the bacteria, which transform the milk into yogurt.

Also, within the receptacle, the containers of milk can be moved closer to or distanced from the absorbent surface by means of some wedges provided in the preferred manner, which ease the adaptation and versatility of the device to different solar radiation conditions and atmospheric temperatures, since the closer the milk is, the greater is the increase in temperature.

Preferably, the cited moveable fastening means of the receptacle are comprised of a base with lateral sides in which respective slots are provided where the ends of an axle incorporated in the base of the container are fit in such a way that the container can be tilted on this axle. In addition, a support rod is provided, which is fastened on its ends in different holes in the sides of the base, on which the back side of the container rests and which is situated in a position more or less close to the back end of the base, depending on whether one wants to tilt the receptacle more or less.

Moreover, it should be pointed out that, also in the preferred mode, the receptacle is a prismatic parallelepiped body, preferably of wood or other material that insulates against heat, like the base, and has a removable upper lid in order to access its interior, where the container for the yogurt is placed.

On the contact surface between the lid and the walls, optionally, a gasket of any material is provided, such as fabric, felt, rubber... which improves the seating between them, as well as some closing means, for example, a magnet embedded in the lid and another on the edge of the walls where it contacts the previous one so that they may attract and in this way close the lid more firmly, so that it is difficult for the heat to escape the receptacle by convection.

In addition, this base with the cited lateral walls and its bottom comprise a box in which to store the yogurt maker. By simply making the axle continue the path that delimits the slots which allow the tilt of the receptacle, the front face, which is where the glass is incorporated and behind which is the solar collector, can be placed upside down thus protecting it and with the elements occupying a reduced, compact space in order to facilitate storage and transport.

It is advisable to point out that the cited container in which the yogurt will be made does not have to be black, in fact, the same cartons (tetrabrik) in which the milk is sold can be used once they are "sown" with the ferment, and comfortably introduced by the upper part of the receptacle of the solar yogurt maker, where, for example, two litres of yogurt can be made in merely 5 hours of sunlight, introducing two types of 1-litre containers of milk.

The functioning of the solar yogurt maker is simple. For each latitude in which it is located and the desired or available orientation (south or north in the Southern Hemisphere, east, southeast, south, southwest or west), there is an appropriate inclination, which depends on the month and the atmospheric temperature of the chosen day. Therefore, the procedure is reduced to: introducing the container(s) with the milk mixed with the ferment in the yogurt maker, setting the yogurt maker at the appropriate inclination and orientation that will be indicated in the directions for use and leave it alone the necessary time until the milk curdles (around 4-5 hours is usually sufficient).

The yogurt maker can be used both outdoors and inside the house and will make yogurt whenever the atmospheric temperature where it is located is over 10ºC (although it could be less if materials are used with less thermal conductivity than the wood or the simple glass, as well as by means of the use of reflectors that increase the surface area of the solar incidence) and sufficient hours of light are available. If the outdoor temperature is lower or strong winds are blowing, it should be used inside the house, near a window with good orientation that permits the lighting of the yogurt maker for the necessary time. Depending on the atmospheric temperature, yogurt can even be made on completely cloudy days.

With all this, the differences and advantages with respect to the electrical yogurt makers are evident: it does not consume electricity and has a compact design that allows making large volumes of yogurt without the need for using individual glasses.

Photovoltaic solar panels are not necessary, since it directly transforms the light into the heat that it requires. It can be made with wood, glass and metal, materials that are either easily biodegradable, such as wood, or easily recyclable, such as glass and metal. It does not have any piece that cannot be replaced easily with another by the user, thus making its useful life be quite extended.

The described solar yogurt maker represents, therefore, an innovation of structural and constitutive characteristics not known until now, reasons that, along with its practical use, give it sufficient basis for obtaining the privilege of exclusivity that is requested.

### DESCRIPTION OF THE DRAWINGS

To complement the description that is being made and in order to aid a better understanding of the characteristics of the invention, this descriptive report is accompanied by a set of drawings as an integral part thereof, which includes but is not limited to the following:
Figure number 1 shows a perspective view of an example of the realization of the solar yogurt maker, object of the invention, represented in the position prior to use, that is, in a vertical position and with the upper lid open, in order to incorporate and extract the container of the yogurt, noting the principal parts and external elements that comprise it, as well as their configuration and placement.
Figure number 2 shows a perspective view of the same example of the yogurt maker of the invention, in this case represented in position of use or functioning, that is, tilted to capture the solar radiation and with the lid closed.
Figure number 3 shows a schematic sectional view, with a vertical slice, of the receptacle that makes up the solar yogurt maker, according to the invention, noting the parts and internal elements that comprise it.

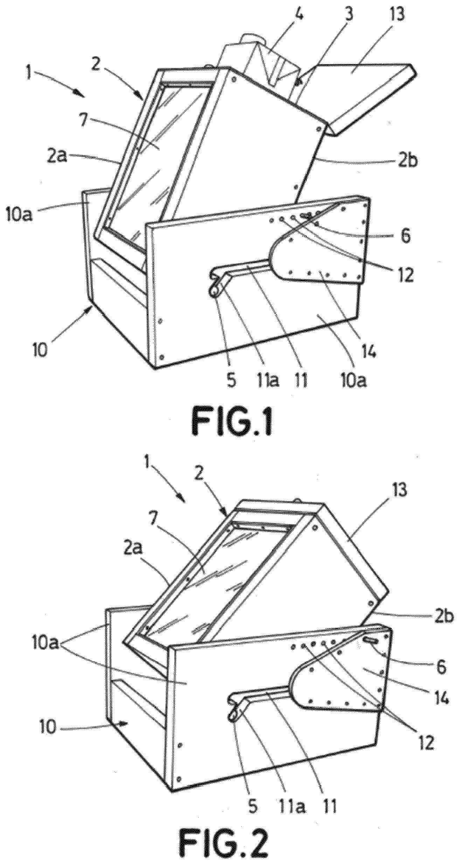

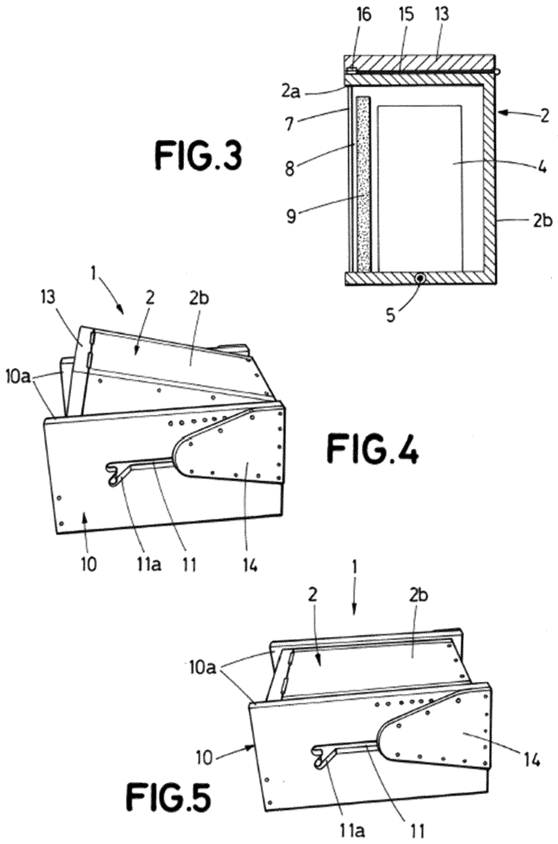

And figures number 4 and 5 show their perspective views of the yogurt maker in its foldup phases of placing the receptacle on the box that makes up its support base, with figure 4 showing the intermediate foldup position and figure 5 the position of being completely folded up.

### PREFERRED REALIZATION OF THE INVENTION

In view of the mentioned figures and according to the numeration adopted, one can observe in them a non-limiting realization of the extolled solar yogurt maker, which includes the parts and elements that are indicated and are described below in detail.

Therefore, as observed in these figures, the yogurt maker (1) in question is configured, essentially, from a receptacle (2) that defines an interior housing (3) suitable for incorporating, at least, one container (4) of milk "sown" with bacteria for making yogurt, with this receptacle (2) having moveable fastening means (5, 6), for tilting its front face (2a) more or less and being able to orient it to the sun, which has a transparent partition (7), of glass or other transparent material with similar qualities, that covers the entire surface, and existing behind this transparent partition (7), with a small separation (8), an absorbent surface or flat solar collector (9) capable of transforming the radiation that impacts this transparent partition (7) into thermal energy. This thermal energy allows increasing the temperature of the milk inside this receptacle (2) up to values appropriate for making yogurt.

In the preferred realization, the receptacle (2) is incorporated to a support base (10) to which it is connected by the aforementioned moveable fastening means (5, 6), which, preferably, are determined by a lower axle (5) on which this base us tilted (10) and a support rod (6) which supports the back part (2b).

More specifically, the base (10) presents lateral walls (10a) on which the respective slots (11) are provided into which the ends of the axle (5) are fitted in the lower part of the receptacle (2), so that it can be tilted forwards or backwards on this axle (5) in order for its front face (2a) to be more or less inclined, along with the transparent partition (7) and the solar collector (9).

In turn, the support rod (6), which is fixed by its ends in different holes (12) made for this purpose in respective parallel rows in the upper back part of one or both of the lateral walls (10a) of the base (10), is situated in a position more or less near the back end of these rows of holes (12), depending on whether one wants the receptacle tilted more or less so that the back part (2b) is supported on it.

Also in the preferred mode, the receptacle (2) is a prismatic parallelepiped body that has an upper removable lid (13) to give access to its interior housing (3) where the container or containers (4) for the yogurt are placed.

Optionally, on the contact surface between the lid (13) and the upper edge of the walls of the receptacle (2), a gasket (15) of any material is provided, such as fabric, felt, rubber or other material, that improves the seating between them, as well as a fastener (16), for example, consisting of a magnet embedded in the lid and another on the edge of the walls of the receptacle (2) where it makes contact with the previous one so that they may attract and in this way keep the lid more firmly closed, making it difficult for the heat to escape the receptacle (2) through convection. Both elements are represented schematically in figure 3.

In addition, the base (10) with lateral walls (10a) and the bottom that joins them (not observable in the figures), constitute a box to store the receptacle (2) with the front face (2a) in which the transparent partition (7) is incorporated upside down, so that it becomes a compact body of minimal volume for storage and transport.

To accomplish this, the slots (11) in which the ends of the axle (5) are fitted and on which the receptacle (2) is tilted extend along both walls (10a), allowing the ends of the axle to be placed in its back part in order to tilt the receptacle forwards and place it with the front face (2a) upside down and the back part (2b) upwards.

Preferably, on the front end of these slots (11), branches of the slots are provided (11a), obliquely to the rest of the slot, where the ends of the axle (5) are fitted in the usage position, to avoid their moving from their place.

Finally, both lateral walls (10a) of the base (10) have respective lateral reinforcements (14).

Lastly, in the preferred realization, both the receptacle (2) and the base (10) are manufactured of wood or other insulating material (at least in the case of the receptacle) with similar qualities.

Having sufficiently described the nature of this invention, as well as the way to put it into practice, it is not considered necessary to extend its explanation further as any expert in the subject may understand its scope and the advantages derived from it, recording that, within its essentiality, it can be carried out in other forms of realization that different in detail from that indicated as an example, and which will also be included under the protection that is being sought whenever they do not alter, change or modify its basic principle.

## Claims

1. SOLAR YOGURT MAKER that, being comprised of a receptacle (2) that defines an interior housing (3) suitable for incorporating, at least, one container (4) with milk "sown" with bacteria for making yogurt, is **characterized in that** this receptacle (2) has moveable fastening means (5, 6), in order to tilt its front face (2a) more or less and to be able to orient it to the sun, which has a transparent partition (7) that encompasses the entire surface area. Behind this transparent partition (7), with a small separation (8), is an absorbent surface or flat solar collector (9) capable of transforming radiation, which crosses through the transparent partition (7) and impacts on said collector, into thermal energy in order to raise the temperature of the milk in the container (4), located within the receptacle (2), to a temperature that provokes its fermentation.

2. SOLAR YOGURT MAKER, according to claim 1, **characterized in that** the receptacle (2) is incorporated on a support base (10) to which it is coupled by moveable fastening means (5, 6).

3. SOLAR YOGURT MAKER, according to claim 2, **characterized in that** the moveable fastening means of the receptacle (2) are determined by an lower axle (5) on which this base is tilted (10) and a support rod (6) on which its back part (2b) is supported.

4. SOLAR YOGURT MAKER, according to claim 3, **characterized in that** the base (10) presents its lateral walls (10a) in which respective slots (11) are provided where the ends of the axle (5) which is fastened in the lower part of the receptacle (2), in such a way that it can be tilted forwards or backwards on this axle (5); and the ends of the support rod (6) are fastened in different holes (12) made in parallel rows in the upper back part of one or both lateral walls (10a) of the base (10), allowing placement of the rod (6) in a position more or less near the back end of these rows of holes (12), according to how one wants to place the receptacle more or less tilted so that its back part (2b) is supported on it.

5. SOLAR YOGURT MAKER, according to claim 4, **characterized in that** the base (10) presents lateral walls (10a) and bottom that join them, constituting a box for storing the receptacle (2) with the front face (2a), in which is incorporated the transparent partition (7), upside down, becoming a compact body of minimal volume for storage and transport.

6. SOLAR YOGURT MAKER, according to any of the claims 1 to 5, **characterized in that** the receptacle (2) is a prismatic parallelepiped body that has an upper removable lid (13) to access it interior housing (3), where the container or containers (4) for the yogurt are placed.

7. SOLAR YOGURT MAKER, according to any of the claims 1 to 6, **characterized in that** the transparent partition (7) is made of glass.

8. SOLAR YOGURT MAKER, according to any of the claims 1 to 7, **characterized in that** the receptacle (2), at least, is made of insulating material.
